# EUROPÄISCHE PATENTANMELDUNG

(11) **EP 1 039 064 A2**
(43) Veröffentlichungstag der Anmeldung: **27.09.2000**
(21) Anmeldenummer: 00104852.9
(22) Anmeldetag: 07.03.2000
(51) Int. Cl.: E04D 13/18, H01L 31/048

(54) **Dacheindeckungselement zur Gewinnung von Energie aus Sonneneinstrahlung**

(30) Priorität: 11.03.1999 DE 29904440 U
(71) Anmelder: ERLUS BAUSTOFFWERKE AG, 84088 Neufahrn (DE)
(72) Erfinder: Interwies, Jan, 84034 Landshut (DE); Hammerl, Bernhard, 84034 Landshut (DE)
(74) Vertreter: LOUIS, PÖHLAU, LOHRENTZ & SEGETH

(57) **Zusammenfassung**

Ein großflächiges Dacheindeckungselement mit einem Solarmodul (5) und einem Modulträger (1), der die Gestalt einer flachen Wanne mit hochstehenden Wannenrändern aufweist. Einer der seitlichen Wannenränder und der traufseitige Wannenrand sind so gestaltet, daß auf ihrer Unterseite Längsrillen vorliegen, welche zum dichten Übergreifen des anliegenden Wannenrands eines Dacheindeckungselements gleicher Art dienen. Falls an die seitlichen oder firstseitigen Wannenränder Falzdachziegel als weitere Dacheindeckungselemente anschließen, sind Dichtstreifen aus elastisch zusammendrückbarem oder umbiegbarem Material in den entsprechenden Randabschnitten des Modulträgers anbringbar. Die Dichtstreifen dienen zur Auflagerung und Abdichtung der anschließenden Falzdachziegel, welche den jeweiligen Wannenrand übergreifen.

## Beschreibung

Die Erfindung betrifft ein Dacheindeckungselement zur Gewinnung von elektrischer oder von Wärmeenergie aus Sonneneinstrahlung, das als Träger für ein Solarmodul dient.

Dacheindeckungselemente dieser Art sind vielfach bekannt, wobei die Solarmodule unmittelbar mit Dachziegeln kombiniert und auf deren Größe abgestimmt sind oder großflächig in Tragkonstruktionen gehalten sind, die ihrerseits einen Teil der Dachhaut ausmachen. Da aufgrund der Wirkungsgradverbesserung und der möglichst günstigen Ausnützung der zur Verfügung stehenden Dachfläche die Neigung zu großflächigen Solarmodulen besteht, befaßt sich die vorliegende Erfindung mit einem solchen Dacheindeckungselement, das ein Mehrfaches der Fläche der zur Schuppeneindeckung verwendeten Dachziegel hat.

Mit Dacheindeckungselementen dieser Art ergibt sich die Schwierigkeit, sie einerseits so in die Dachhaut zu integrieren, daß die Dichtheit des Daches gewährleistet ist, andererseits sie einfach und daher kostengünstig zu gestalten. Bei einem bekannten Dacheindeckungselement dieser Art (EP 549 560 A1) ist vorgeschlagen, den als Tragkonstruktion für das Solarmodul dienenden Rahmen an allen vier Rändern gleich wie die für die Deckung des Daches verwendeten Dachziegel auszubilden. Hierzu sind der firstseitige und der traufseitige Randbereich komplementär zu den anschließenden Dachziegeln gestaltet; entsprechendes gilt für die Seitenränder des Dacheindeckungselements. Sehr ähnlich ist die Ausgestaltung eines weiteren bekannten Dacheindeckungselements (DE 44 08 508 A1), bei dem ebenfalls der traufseitige und der firstseitige Randbereich in ihren Konturen an anschließende Dachziegel angepaßt sind, darüber hinaus die Seitenränder jedoch zu einem Wasserfalz bzw. einem Deckfalz gestaltet sind, die zur Anpassung an mehrere Reihen seitlich anschließender Dachziegel Abstufungen aufweisen.

Diese bekannten Lösungen sind aus mehrfachen Gründen in der Praxis kaum ausführbar: So zwingt der Vorschlag, den firstseitigen und den traufseitigen Randbereich des Dacheindeckungselements an die anschließenden Dachziegel in ihrer Kontur anzupassen dazu, zusammen mit solchen Dacheindeckungselementen entweder nur eine bestimmte Dachziegelform zu verwenden oder für die unterschiedlichen Dachziegelformen jeweils unterschiedliche Dacheindeckungselemente dieser Art vorzuhalten. Noch schwieriger ist die vorgeschlagene Anpassung der Seitenränder des Dacheindeckungselements an die jeweilige Form des Wasserfalzes bzw. des Deckfalzes anschließender Falzdachziegel, weil hierbei Probleme wie die Ausbildung eines Vierziegelecks längs der geradlinig verlaufenden Seitenränder des Dacheindeckungselements nicht beherrschbar sind. Im Ergebnis besteht daher auch mit solchen Vorschlägen zumindest im Bereich der Seitenränder des Dacheindeckungselements die Gefahr von Undichtheit der Dachhaut.

Aufgabe der vorliegenden Erfindung ist es, ein Dacheindeckungselement vorzuschlagen, das einerseits als Teil der Dachhaut deren Dichtheit gewährleistet, andererseits weitgehend unabhängig von der Art der verwendeten Dachziegel ist und darüber hinaus eine kostengünstige Herstellung erlaubt.

Erreicht wird dies durch die Ausgestaltung des Dacheindeckungselemente nach Anspruch 1 oder 2 und die Dachausbildung nach Anspruch 22.

Die erfindungsgemäßen Gestaltungen gemäß den Patentansprüchen 1 und 2 unterscheiden sich nur im Hinblick auf die Art des Anschlusses firstseitig und seitlich angrenzender Dachziegel. Im ersten Fall sind im firstseitigen Randbereich sowie in den Seitenrandbereichen der Wanne elastisch verformbare Dichtstreifen vorgesehen, die als Auflage für den entsprechenden Wannenrand übergreifende Dachziegel dienen. Durch das Gewicht der Dachziegel werden diese Dichtstreifen elastisch verformt, sodaß einerseits eine Abdichtung gegen Schlagregen gewährleistet ist und andererseits das von den Dachziegeln ablaufende Wasser in die Wanne des Modulträgers geleitet wird und aus dieser zur Traufseite hin abfließt. Im zweiten Fall ist im firstseitigen Randbereich der Wanne ein plattenförmiges Dichtelement befestigbar, das die firstseitig angrenzenden Dachziegel untergreift und auf diese Weise ablaufendes Wasser in das Wanneninnere des Modulträgers leitet, von wo es witergefördert wird. In den seitlichen Randbereichen der Wanne ist hingegen jeweils eine nach oben ragende, vom firstseitigen bis zum traufseitigen Rand verlaufende Falzrippe angeordnet, an der die zugeordneten Seitenränder von benachbarten Dachziegeln von außen, d.h. von außerhalb des Modulträgers, anliegen oder einen kurzen Abstand davon einhalten.Indiesem Fall übernimmt die Falzrippe die Aufgabe, das Eindringen von Wasser durch Schlagregen und dergleichen zu verhindern; von den Dachziegeln ablaufendes Wasser wird durch die hochstehehnde Falzrippe umgelenktund im Randbereich der Wanne in Richtung Traufe geleitet. Da die Abdichtung des firstseitigen Randbereichs und diejenige der Seitenrandbereiche unabhängig voneinander sind, können die vorstehend beschriebenen Ausführungsformen davon auch miteinander kombiniert werden. Das heißt, der Modulträger kann im firstseitigen Randbereich einen elastischen Dichtstreifen aufweisen, während in den Seitenrandbereichen jeweils eine Falzrippe vorgesehen ist, und umgekehrt.

Die Dichtstreifen aus einem elastisch zusammendrückbaren oder biegbaren Material, z. B. elastischem Schaumstoff bzw. Borsten, werden unter dem Gewicht der Dachziegel zusamniengedrückt oder umgebogen und passen sich dadurch dicht an die jeweilige Unterkontur der Dachziegel an. Wesentlich ist hierbei, daß für den Fall des Anschlusses seitlich benachbarter Dachziegel auch auf der Seite, der eigentlich der Wasserfalz der anschließenden Dachziegel zugeordnet ist, Doppelwulst-Dachziegel oder längsgeschnittene Standard-Falzdachziegel eingesetzt werden, die ihrerseits den zugeordneten Wannenrand des Modulträgers übergreifen und auf dem dort vorgesehenen Dichtstreifen aufliegen. Doppelwulstziegel stehen für die meisten der gängigen Falzdachziegel jeweils zur Verfügung, so daß diesbezüglich bei der erfindungsgemäßen Lösung eine Einschränkung auf ein bestimmtes Falzdachziegelmodell entfällt. Das gleiche gilt für die Verwendung von längsgeschnittenen StandardFalzdachziegeln; das Längsschneiden an StandardDachziegeln durch den Dachdecker an Ort und Stelle läßt sich mit geringem Arbeitsaufwand ausführen.

Der wannenförmige Modulträger des erfindungsgemäßen Dacheindeckungselements weist keinerlei Konturanpassung an angrenzende Dachziegel auf mit der Ausnahme, daß die Höhe der hochstehenden Wannenränder die übliche Rippenhöhe von Falzdachziegeln, beispielsweise etwa 12 mm, nicht übersteigt. Deshalb kann der Modulträger an seinen Seitenbereichen und im firstseitigen Randbereich von anschließenden Dachziegeln übergriffen werden, ohne deren bestimmungsgemäße Lage zu beeinträchtigen

Für den Fall, daß traufseitig an das erfindungsgemäße Dacheindeckungselement Dachziegel anschließen, ist auch dort keine Anpassung an diese vorgesehen. Vielmehr ist an dem traufseitigen Randabschnitt des Modulträgers ein plastisch verformbares Dichtelement, z. B. in Form einer Bleifolie, befestigbar, das die traufseitig anschließenden Dachziegel an deren Oberseite übergreift und an diese angeformt werden kann. Durch den wannenförmigen Modulträger traufwärts abströmendes Wasser strömt daher über dieses Dichtelement hinweg auf die anschließenden Dachziegel.

Bevorzugt ist der Modulträger des erfindungsgemäßen Dacheindeckungs-elements so gestaltet, daß er ohne zusätzliche Dichtmaßnahmen mit weiteren Dacheindeckungselementen gleicher Art montiert werden kann. Hierzu weist zweckmäßigerweise der Seitenrand der Wanne eine nach unten offenen Längsrille auf. Seitlich benachbarte Modulträger übergreifen damit auf der einen Seite den zugeordneten Wannenrand bzw. fügen sich auf der anderen Seite in die Längsrille des einen Seitenrands ein. Für traufseitig anschließende Modulträger kann analog an der Wanne eine nach unten offene Querrille vorgesehen sein. Der traufseitig anschließende Modulträger wird von dem firetseitig darüber angebrachten Modulträger übergriffen, wobei sich dessen firstseitiger Wannenrand in die Querrille an der Unterseite des traufseitigen Randabschnitts des darüber liegenden Modulträgers einfügt. In diesem Fall bedarf es nicht des oben erwähnten Dichtelements aus plastisch verformbarem Material. Vielmehr liegt die Querrille genügend weit in Firstrichtung versetzt über dem traufseitigen Rand des Modulträgers, so daß der Randabschnitt die Befestigungselemente des traufseitig anschließenden Modulträgers überdecken kann. Im firstseitigen Randbereich bedarf es in diesem Fall auch nicht eines elastisch verformbaren Dichtstreifens, der nur zur Auflage anschließender Dachziegel bestimmt ist.

Für den Modulträger eignen sich grundsätzlich Kunststoff und Metall als Werkstoff. Bei der Herstellung aus Kunststoff kann daran gedacht sein, den Modulträger unmittelbar im Spritzgießverfahren zu fertigen oder aus einem thermoplastischen Kunststoffmaterial, das in Bahn oder Plattenforin vorliegt, die gewünschte Form durch Heißprägung in entsprechenden Werkzeugen zu erzeugen. Bei Herstellung aus Metall ist zweckmäßigerweise der Modulträger aus Blech geformt, wobei die Querrille an der Unterseite des traufseitigen Randbereichs sowie die Längsrille an dem einen Seitenrand durch jeweils eine Abwinkelung oder Faltung des Wannenrands gebildet sind. In beiden Fällen ist es einfach, anschließend an die Querrille den traufseitigen Randbereich einstückig als Fortsetzungslappen des Kunststoff- oder Blechznaterials zu gestalten, der flach auf dem Wannenboden eines gegebenenfalls traufseitig anschließenden Dacheindeckungselements aufliegt.

Die seitlich anzubringenden elastisch verformbaren Dichtstreifen bzw. die Falzrippen können grundsätzlich unmittelbar auf dem Wannenboden und parallel zu dem jeweiligen Seitenrand befestigt werden, z. B. durch Klebung bzw. durch Schweißung. Die auf den Dichtstreifen aufliegenden Dachziegel müssen jedoch das anschließende Solarmodul freihalten, d.h. das Solarmodul müßte beidseitig in jedem Modulträger Abstand zu den Seitenrändern haben. Falls mehrere Dacheindeckungselernente dieser Art nebeneinander angeordnet sind, ergeben sich dabei jedoch von den Solarmodulen und von Dachziegeln nicht überdeckte Flächen, die zur Energiegewinnung nicht ausgenützt sind und darüber hinaus das Aussehen des Dachs beeinträchtigen können. Dieser Nachteil läßt sich durch zwei unterschiedliche Weiterbildungen der Erfindung beseitigen: Wenn die erfindungsgemäßen Modulträger auf die jeweiligen Solarmodule form- und größenmäßig so abgestimmt sind, daß jeder Modulträger zur Aufnahme eines Solarmoduls bestimmt ist, ist nach einer Weiterbildung der Erfindung vorgesehen, daß die Seitenrandbereiche durch gesonderte Randleisten ausgebildet sind, die ihrerseits wannenförmig sind und an ihrer Unterseite eine Längsrille zum Übergreifen des zugeordneten Seitenrands des Modulträgers aufweisen. Diese Randleisten tragen die Dichtstreifen bzw. Falzrippen und können von vornherein fest damit verbunden sein. Schließen in seitlicher Richtung mehrere Dacheindeckungselemente gleicher Art aneinander an, so kann auf dazwischen liegende Randleisten verzichtet werden und die Modulträger übergreifen sich gegenseitig in der geschilderten Weise mit ihren an einem Seitenrand vorgesehenen Längsrillen. Dabei entspricht der Modulträger in Größe und Form sehr weitgehend dem Solarmodul. Somit schließen die Solarmodule der mehreren nebeneinander liegenden Dacheindeckungselemente eng aneinander an; die zur Verfügung stehende Dachfläche ist diesbezüglich vollkommen ausgenutzt und das Dachbild ist nicht beeinträchtigt.

Hingegen können nach einer anderen Weiterbildung der Erfindung die Modulträger unabhängig von Größe und Form der jeweils zum Einsatz kommenden Solarmodule sein, müssen jedoch in diesem Fall so gestaltet sein, daß sie ein Übergreifen der Anschlußränder jeweils benachbarter Modulträger durch die Solarmodule zulassen und eine Befestigung eines Solarmoduls an zwei oder mehr nebeneinander liegenden Modulträgern ermöglichen. Wenn nach einer diesbezüglich bevorzugten Ausführung die Modulträger in Richtung First/Traufe auf die Solarmodule in der vorstehend beschriebenen Weise Größenmäßig abgestimmt sind, quer dazu, in der Breite, jedoch mit den Solarmodulen nicht übereinstimmen, so muß zusätzlich die Anzahl der miteinander verbundenen, einen Teil der Dachhaut bildenden Modulträger auf die Anzahl der einzusetzenden Solarmodule so abgestimmt sein, daß an den beiden gegenüberliegenden Seitenrändern der so gebildeten Dachhautfläche Platz für die übergreifenden Dachziegel freigehalten ist. Hierdurch können die Solarmodule dicht an dicht auf der durch die Modulträger gebildeten Dachhautfläche angeordnet werden, so daß auch hier die gewählte Dachfläche voll für die Energiegewinnung ausgenutzt ist und das Erscheinungsbild des Daches nicht gestärt wird.

Weitere Vorteile und Merkmale der Erfindung ergeben sich aus der nachfolgenden Beschreibung von Ausführungsbeispielen anhand der beiliegenden Zeichnungen sowie aus weiteren Unteransprüchen. In den Zeichnungen zeigen:
Fig. 1 eine Draufsicht auf einen Modulträger;
Fig. 2 einen Längsschnitt längs der Linie II-II in Fig. 1, wobei Einzelheiten zwecks Übersichtlichkeit weggelassen sind;
Fig. 3 einen Schnitt längs der Linie III-III in Fig. 1;
Fig. 4 eine Draufsicht auf eine Randleiste zur Aufnahme eines Dichtstreifens;
Fig. 5 einen Schnitt längs der Linie V-V in Fig. 4;
Fig. 6 einen Querschnitt längs der Linie VI-VI in Fig. 4;
Fig. 7 eine Einzeldarstellung in größerem Maßstab des traufseitigen Randbereichs;
Fig. 8 eine mehrfach gebrochene Draufsicht auf eine dem firetseitigen Randbereich zugeordnete Tragleiste für das Solarmodul;
Fig. 9 einen Querschnitt der Tragleiste gemäß Fig. 8;
Fig. 10 eine Schnittdarstellung des firstseitigen Randbereichs mit übergreifendem Dachziegel;
Fig. 11 eine Schnittdarstellung des traufseitigen Randbereichs mit einem einen anschließenden Dachziegel übergreif enden Dichtelement;
Fig. 12 eine Schnittdarstellung eines Seitenrandbereichs mit übergreifendem DoppelwulstDachziegel;
Fig. 13 eine Schnittdarstellung des gegenüberliegenden Seitenrandbereichs mit überdeckendem Falzdachziegel;
Fig. 14 eine zu Fig. 2 analoge Darstellung einer modifizierten Ausführungsform des Modulträgers;
Fig. 15 eine perspektivische Ansicht zweier nebeneinander angeordneter Dacheindeckungselemente;
Fig. 16 eine Draufsicht auf ein firstseitig an einen Modulträger anschließendes plattenförmiges Dichtelement mit seitlich zugeordneten Anschlußstücken;
Fig. 17 eine schematische Schnittdarstellung längs der Linie XVII - XVII in Fig. 16, analog zu Fig. 10;
Fig. 18 eine zu Fig. 12 analoge Schnittdarstellung eines Seitenrandbereichs mit modifizierter seitlicher Abdichtung, und
Fig. 19 eine zu Fig. 13 analoge Schnittdarstellung des gegenüber liegenden Seitenrandbereichs mit modifizierter seitlicher Abdichtung.

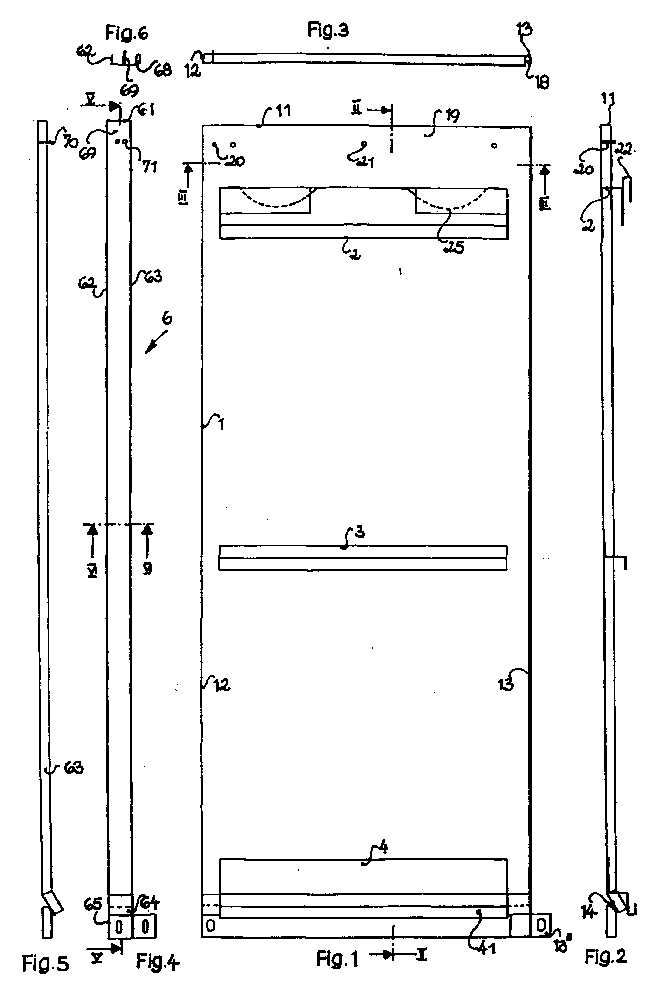

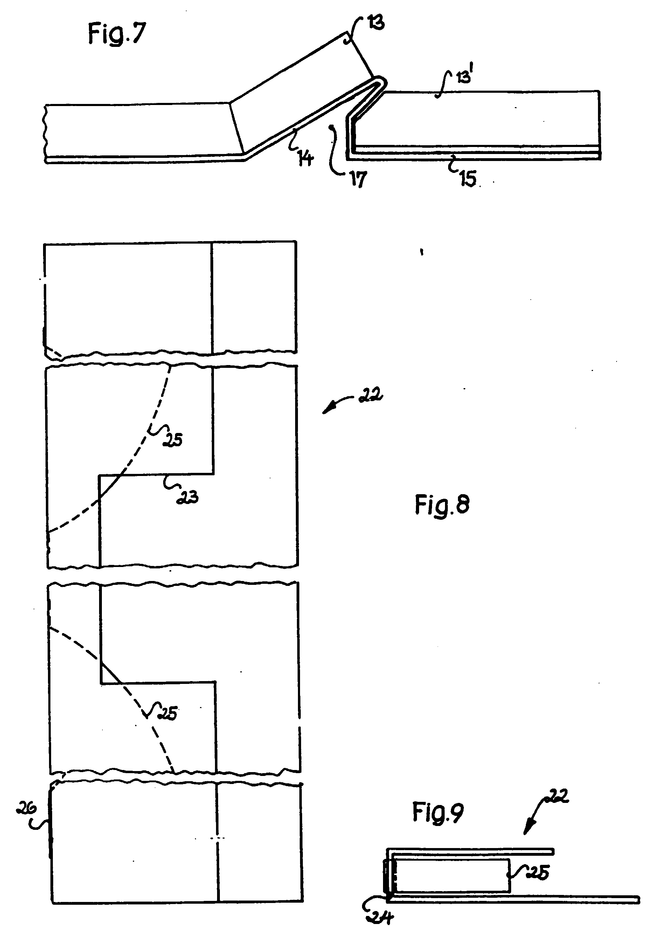

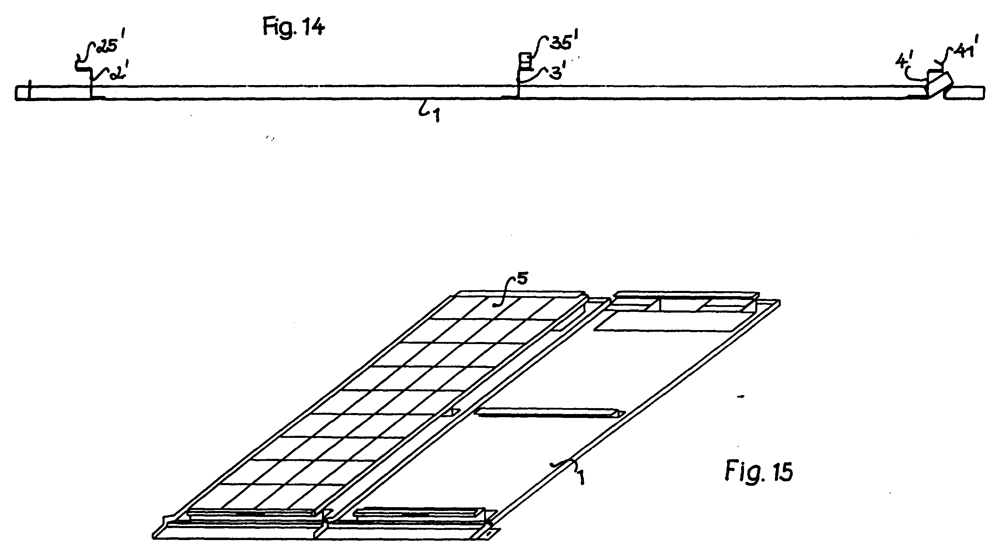

Der Modulträger gemäß den Fig. 1 bis 3 besteht im wesentlichen aus einer Blechwanne 1, auf deren Wannenboden Tragleisten 2, 3 und 4 für ein Solarmodul 5 (Fig. 15) befestigt, z. B. angeschweißt sind. Der firstseitige Wannenrand 11 und die seitlichen Wannenränder 12 und 13 stehen weitgehend senkrecht zu dem Wannenboden und sind an den aneinanderstoßenden Ecken dicht miteinander verbunden. Der traufseitige Wannenrand 14 ist hingegen unter einem Winkel von beispielsweise 30· schräg nach außen geneigt, um das Abfließen von in der Wanne gesammeltem Wasser zu erleichtern. Wie aus Fig. 7 hervorgeht, ist das Material des Wannenrands 14 erneut zurück auf sich selbst abgebogen, beispielsweise unter Bildung eines spitzen Winkels von 15·, und wiederum anschließend zweifach abgebogen, so daß dadurch ein traufseitiger Randabschnitt 15 gebildet ist. Der hochstehende seitliche Wannenrand 12 bzw. 13 folgt auf beiden Seiten dieser Art von Faltung des traufseitigen Wannenrands 14 und mit dem traufseitigen Randabschnitt 15 ist ein entsprechendes Randstück 13' dicht verbunden, das eine Fortsetzung des Wannenrands 13 bildet. An diesem Randstück 13' ist eine seitlich abstehende Befestigungslasche 13'' mit einem Langloch darin befestigt (Fig. 1). Die Befestigungslasche 13'' ist, ohne daß dies näher dargestellt ist, als Winkelstück ausgebildet und durch Punktschweißen mit dem Randstück 13' verbunden.

Die Faltung oder Abwinkelung des traufseitigen Wannenrands 14 ergibt eine nach unten offene Querrille 17, deren Hähe ausreichend ist, um den firstseitigen Wannenrand 11 darin aufzunehmen, falls der traufseitige Randabschnitt 15 einen anschließenden Modulträger überlappen soll. Gemäß Fig. 3 ist der in Fig. 1 rechte Seitenrand 13 ebenfalls abgebogen und weitgehend auf seine Außenseite zurückgefaltet, so daß dadurch eine nach unten offene Längsrille 18 gebildet ist. Diese dient dazu, den Seitenrand 12 eines benachbart anzuordnenden Modulträgers 1 zu übergreifen und auf diese Weise einen Spalt zwischen den beiden Modulträgern zu überdecken und abzudichten. Die Umfaltung des Seitenrands 13 zu der Ausbildung der Längsrille 18 kann ausgeprägter als in Fig. 3 dargestellt erfolgen, so daß die Längsrille 18 praktisch auf die Blechdicke des Seitenrands 12 beschränkt ist und darauf durch Reibschluß festgeklemmt werden kann.

In dem firstseitigen Randabschnitt 19 des Modulträgers 1 ist nahe der in Fig. 1 linken Ecke ein hochstehender Gewindestift 20 dicht befestigt, z. B. angeschweißt, der zur Verbindung von benachbarten Modulträgern 1 dient, wie nachfolgend noch näher beschrieben wird. Ebenfalls im firstseitigen Randabschnitt 19 sind im Wannenboden drei Lächer 21 vorgesehen, durch welche sich nicht gezeigte Befestigungsschrauben erstrecken, mittels deren der Modulträger 1 an einer Dachlatte befestigt werden soll.

Wenn auf dem Dach benachbart zu dem Seitenrand 13 ein weiterer Modulträger 1 angeordnet werden soll, so wird hierzu dessen linker Seitenrand 12 in die Längsrille 18 eingefügt. Da die Längsrille 18 sich auch in dem Randstück 13' hinter der Befestigungslasche 13'' fortsetzt und weil außerdem die Längsrille 18 auch dem Faltungsverlauf bei der Ausbildung der Querrille 17 am traufseitigen Randabschnitt 15 folgt, liegen die beiden wannenförmigen Modulträger 1 nach dem Ineinanderfügen im wesentlichen in der gleichen Ebene. Die Befestigungslasche 13'' liegt dabei auf dem unteren Randabschnitt 15 des benachbarten Modulträgers 1 so auf, daß sich das darin vorgesehene Langloch mit dem auf der - in Fig. 1 - linken Seite vorgesehenen Langloch deckt.

Wenn zusätzlich zu dem seitlich benachbarten Modulträger 1 oder unabhängig davon ein in Richtung First folgender Modulträger 1 angeschlossen werden soll, so wird letzterer mit seinem traufseitigen Randabschnitt 15 derart auf den firstseitigen Randabschnitt 19 des ersteren Modulträgers aufgelegt, daß sich die Querrille 17 und der firstseitige Wannenrand 11 ineinanderfügen. In diesem Zustand überdeckt der traufseitige Randabschnitt 15 die Befestigungslächer 21 und der Gewindestift 20 durchsetzt das auf der linken Seite des traufseitigen Randabschnitts 15 vorgesehene Langloch. Wird mit dem in Richtung First anschließenden Modulträger 1 wiederum - bezüglich der Darstellung in Fig. 1 links davon - ein seitlich benachbarter Modulträger 1 angeschlossen, so kommt dessen Befestigungslasche 13'' innerhalb des schräg in Richtung Traufe liegenden Modulträgers 1 zu liegen und fädelt sich dabei mit ihrem Langloch ebenfalls auf den Gewindestift 20 davon auf. Durch Aufschrauben einer Schraubmutter auf den Gewindestift 20 können dann die drei Modulträger 1 fest miteinander verbunden werden. Da in diesem Zustand ihre einander zugewendeten Seitenränder jeweils von einem Seitenrand 13 mit der Längsrille 18 übergriffen sind und der firetseitige Randabschnitt 19 mit dem firstseitigen Wannenrand 11 von dem traufseitigen Randabschnitt 15 mit der Querrille 17 übergriffen wird, bildet die Gesamtheit der entsprechenden Dacheindeckungselemente einen integralen dichten Bestandteil der Dachhaut.

Die in den Fig. 4 bis 6 dargestellte Randleiste 6 hat wie der Modulträger 1 die Gestalt einer flachen Wanne und besitzt auch einen firstseitigen Rand 61, Seitenränder 62 und 63 sowie einen traufseitigen Rand 64 mit daran anschließendem traufseitigem Randabschnitt 65. Diese Wannenränder sind kongruent mit den Wannenrändern des Modulträgers 1 geformt bzw. umgefaltet, so daß die Randleiste 6 in gleicher Weise mit einem Modulträger 1 zusammengefügt werden kann, wie dies für Modulträger untereinander vorstehend beschrieben ist. Im firstseitigen Randbereich 69 der Randleiste 6 ist ebenfalls ein Gewindestift 70 angeschweißt, neben welchem ein Befestigungsloch 71 vorgesehen ist. Wie aus Fig. 6 hervorgeht, bildet der in Fig. 4 rechte Seitenrand 63 der Randleiste ebenfalls eine nach unten offene Längsrille 68, die der Verbindung der Randleiste 6 mit einem Modulträger 1 dient. Folglich unterscheidet sich die Randleiste 6 von einem Modulträger 1 bezüglich der Gestaltung der Wannenform nur durch die unterschiedliche Breite; die Breite des Modulträgers 1 beträgt beispielsweise 530 mm, diejenige der Randleiste 6 beispielsweise 35 mm.

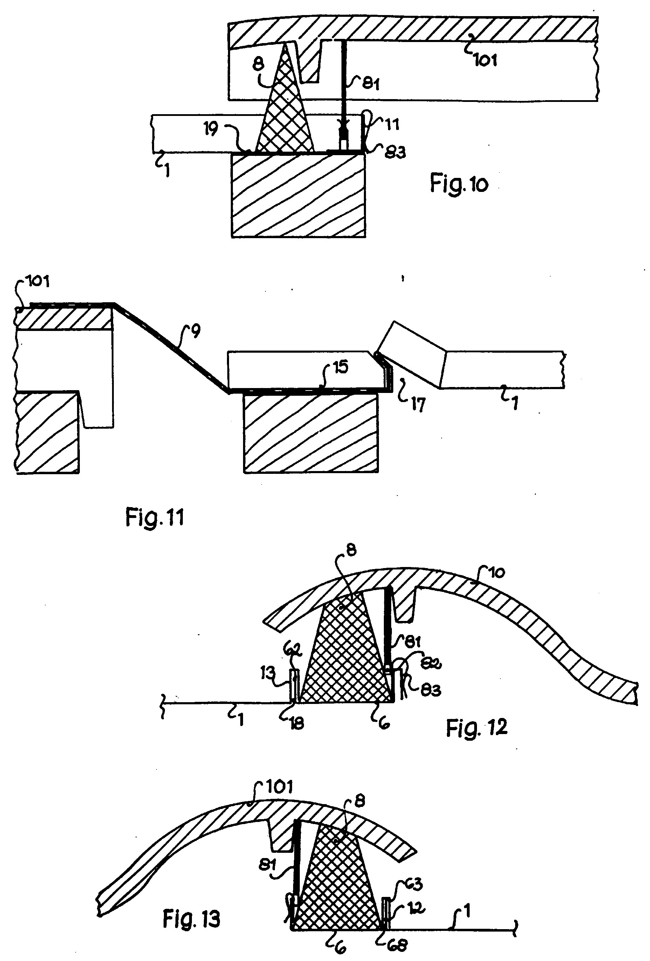

Randleisten 6 werden an einen Modulträger 1 dann angesetzt, wenn seitlich benachbart zu diesem Modulträger 1 das Dach mit Falzdachziegeln eingedeckt ist und das von dem Modulträger 1 aufzunehmende Solarmodul im wesentlichen gleich groß wie der Modulträger ist. Einen solchen Zustand zeigen schematisch die Fig. 12 und 13. Der Seitenrand 13 des Modulträgers 1 übergreift mit der Längsrille 18 den zugeordneten Seitenrand 62 der Randleiste 6. Mit der Randleiste 6 ist fest ein sich über die ganze Länge der Randleiste 6 erstreckender Dichtstreifen 8 aus einem elastisch zusammendrückbaren Dichtmaterial, z. B. Schaumstoff, durch Klebung fest verbunden. Der Dichtstreifen 8 dient als Auflage für die Mehrzahl von in Richtung First/Traufe aufeinander folgenden Doppelwulst-Falzdachziegeln 10, deren hier linksseitiger, durch den zweiten Wulst gebildeter Deckfalz sich auf dem Dichtstreifen 8 abstützt. Parallel zu dem Dichtstreifen 8 ist an der Randleiste 6 ein Borstenkamm 81 angeordnet, der aus einer Vielzahl eng stehender Borsten besteht, die in einer zwingenartigen Halterung 82 fixiert und mittels einer Klemmvorrichtung 83 an der Randleiste 6 festgeklemmt sind. Der Borstenkamm 81 ist als zusätzliche Abdichtung gegen seitliche Einwehungen gedacht, kann jedoch auch wegfallen oder anstelle des Dichtstreifens 8 vorgesehen sein.

Fig. 12 zeigt einen Zustand, in welchem der DoppelwulstFalzdachziegel 10 gerade aufgelegt wird und der Dichtstreifen 8 sowie der Borstenkamm 81 noch nahezu ihre unverformte Gestalt haben. Beide Dichtelemente verformen sich jedoch unter dem Gewicht des Falzdachziegels 10 soweit, daß dieser die bestimmungsgemäße Flachlage auf dem Dach einnehmen kann. Dabei ist der Dichtstreifen 8 breit verformt, so daß sich eine entsprechend breite Dichtfläche an der Unterseite des Falzdachziegels 10 ergibt, und der Borstenkamm 81 ist entsprechend weit umgebogen.

Fig. 13 zeigt den verbundenen Zustand einer Randleiste 6 mit dem linken Seitenrand 12 des Modulträgers 1. Dabei übergreift der Seitenrand 63 mit der Längsrille 68 der Randleiste 6 den Seitenrand 12. Auf dieser Seite des Modulträgers 1 schließen Falzdachziegel 101 an, die dem gleichen Dachziegelmodell wie die DoppelwulstFalzdachziegel 10 auf der gegenüberliegenden Seite entsprechen, jedoch die Standardausführung davon sind. Der Dichtstreifen 8 dient auch hier als Auflage für den Deckfalz der Falzdachziegel 101; Fig. 13 zeigt analog zu Fig. 12 den Zustand, bei dem der Dichtstreifen 8 und der Borstenkamm 81 ihre noch weitgehend unverformte Gestalt haben.

Die Fig. 10 und 11 zeigen Vorkehrungen, die für den Anschluß von Falzdachziegeln an die Firstseite bzw. an die Traufseite eines Modulträgers 1 getroffen sein müssen. Gemäß Fig. 10 ist in dem firstseitigen Randbereich 19 über den hier nicht gezeigten Befestigungslächern 21 ein Dichtstreifen 8 angebracht, z. B. durch Kleber befestigt. Parallel zu dem Dichtstreifen 8 oder als Alternative dazu verläuft auch hier ein Borstenkamm 81, der am firstseitigen Wannenrand 11 mittels einer Klemmvorrichtung 83 festgeklemmt ist. Die firstseitig an den Modulträger 1 anschließenden Falzdachziegel 101 liegen mit ihrem Fußbereich auf dem Dichtstreifen 8 und dem Borstenkamm 81 auf und drücken diese, ausgehend von dem in Fig. 10 gezeigten Anfangszustand, so weit zusammen, daß sie ihre bestimmungsgemäße Flachlage in der Dachhaut einnehmen. Ebenso wie gemäß den Fig. 12 und 13 erlaubt dies die Hähe der Wannenränder des Modulträgers 1 in Bezug auf die Falzrippen der Falzdachziegel 101.

Für den Anschluß von traufseitig bezüglich des Modulträgers 1 angeordneten Falzdachziegeln 101 ist der Einsatz eines zusätzlichen Dichtelements 9 erforderlich, das im Fall des Ausführungsbeispiels ein plissiertes Bleiband oder eine Bleifolie ist. Dichtmaterial dieser Art ist plastisch verformbar und kann daher in der in Fig. 11 gezeigten Weise an die Unterseite des traufseitigen Randbereichs 15 und an die Innenfläche der Rille 17 angeformt und insoweit damit durch Kleben, Klammern oder Festklemmen verbunden werden. Der unter dem traufseitigen Randbereich 15 hervorstehende Teil des Dichtelements wird abgebogen und an die Oberseite der Falzdachziegel 101 angeformt und angelegt. Infolge der plastischen Verformbarkeit dieses Dichtmaterials behält es seine durch Anformung erhaltene Gestalt dauernd bei. Der traufseitige Randbereich 15 ist in dem gezeigten Ausführungsbeispiel durch eine zusätzliche Dachlatte unterstützt. Eine solche zusätzliche Dachlatte ist nur dann erforderlich, wenn - beispielsweise bei der Nachrüstung eines schon bestehenden Dachs mit Solarmodulen - die der Traufseite des Modulträgers 1 zugeordnete, bereits vorhandene Dachlatte einen zu großen Abstand von dem traufseitigen Randbereich 15 hat oder wenn - bei einer Neueindeckung - im Bereich der Modulträger 1 von vornherein keine Dachlatten vorgesehen sind.

Gemäß den Fig. 1 und 2 handelt es sich bei den Tragleisten 2, 3 und 4 zur Auflagerung des Solarmoduls 5 um unterschiedlich gestaltete Winkelprofile, deren Querschnitt im einzelnen aus Fig. 2 hervorgeht. Diese Winkelprofile sind mit dem Wannenboden des Modulträgers 1 durch Klebung oder Schweißung verbunden. Ihre dem Solarmodul zugewandten Oberseiten liegen diesem entsprechend weitgehend in einer Ebene. Zusätzlich weisen jedoch die firstseitige Tragleiste 2 und die traufseitige Tragleiste 4 an ihrer Oberseite Befestigungselemente in Form von weiteren angeschweißten Winkelprofilen auf, die der Halterung des Solarmoduls 5 dienen und deren firstseitigen bzw. traufseitigen Rand formschlüssig übergreifen. Das in Fig. 2 gezeigte Halteprofil 22 der firstseitigen Tragleiste 2 ist näher in den Fig. 8 und 9 dargestellt. Daraus geht hervor, daß das Halteprofil 22 an seinem oberen Schenkel eine Ausnehmung 23 bildet, die zur Aufnahme der nicht gezeigten Anschlußschaltung des Solarmoduls 5 dient, um dieses eben auf die Tragleisten 2, 3 und 4 auflagern zu können. An der Innenseite des Verbindungsstegs 24 der Halteprofile 22 sind bogenförmige Federelemente 25 mit einem Ende davon befestigt, deren anderes Ende jeweils eine nicht näher gezeigte schlitzförmige (tm)ffnung durchsetzt und mit einer flachen Abwinkelung 26 an der Außenseite des Verbindungsstegs 24 anliegt. Das Solarmodul 5 kann somit gegen den Widerstand der Federelemente 25 in das Halteprofil 22 eingeschoben werden, bis es flach auf den Tragleisten 2, 3 und 4 aufliegt. Danach kann es mit dem traufseitigen Rand in das Halteprofil 41 (Fig. 1) der Tragleiste 4 eingeschoben werden, in welches es durch die Federkraft der Federelemente 25 eingedrückt und gehalten wird. Für den Anschluß der nicht gezeigten Anschlußleitungen des Solarmoduls 5 sind in den Tragleisten 2, 3 und 4 Durchgangsäffnungen vorgesehen, die nicht näher dargestellt sind. Bei der vorstehend beschriebenen Befestigungsanordnung für das Solarmodul 5 ragen die Tragleisten 2,3 und 4 deutlich über die Ränder der Modulträger 1 hinaus. Außerdem läßt es die Art der formschlüssigen Halterung der Solarmodule 5 an den Tragleisten zu, auch Solarmodule daran zu befestigen, die in ihrer Breite nicht auf die Breite der Modulträger 1 abgestimmt sind, z. B. deren Breite übersteigen. Somit können an nebeneinander angeordneten Modulträgern 1 mehrere Solarmodule dicht an dicht formschlüssig befestigt werden. Da die Federelemente 25 außerdem nur unter Reibschluß an dem firstseitigen Rand der Solarmodule anliegen, lassen sie auch eine seitliche Verschiebung der Solarmodule zu, die gegebenenfalls zur Lagekorrektur der Solarmodule erforderlich ist.

Fig. 14 zeigt eine abgewandelte Befestigungsanordnung für das Solarmodul 5. Hierzu sind auf den Z-förmigen Tragleisten 2' und 3' gebogene Federklammern 25' bzw. 35' so befestigt, daß sie den firstseitigen Rand bzw. die gegenüberliegenden Seitenränder des Solarmoduls 5 in dessen eingeschnapptem Zustand übergreifen können. Die traufseitige Tragleiste 4' weist lediglich ein etwa Uförmiges Halteprofil 41' auf, dessen freier Schenkel zur Erleichterung des Einfügens des zugeordneten Solarmodulrands leicht angehoben ist. Zur Befestigung wird das Solarmodul 5 zunächst in das Halteprofil 41' eingeschoben und anschließend durch Aufdrücken auf den Modulträger 1 in die Federelemente 25' und 35' eingeschnappt. Wenn die Federklammern 25' bzw. 35' bleibend an den Tragleisten 2' und 3 befestigt sind, müssen bei dieser modifizierten Befestigungsanordnung die Solarmodule 5 so auf die Größe der Modulträger 1 abgestimmt sein, daß jeder Modulträger 1 zur Aufnahme nur eines Solarmoduls 5 bestimmt und geeignet ist. Soll in gleicher Weise wie bei dem vorstehenden Ausführungsbeispiel beschrieben auch eine Befestigung von nicht auf die Breite der Modulträger Größenmäßig abgestimmten Solarmodulen möglich sein, so kann dies durch eine läsbare Befestigung zumindest der Federklammern 35' an den zugeordneten Tragleisten 3' erreicht werden.

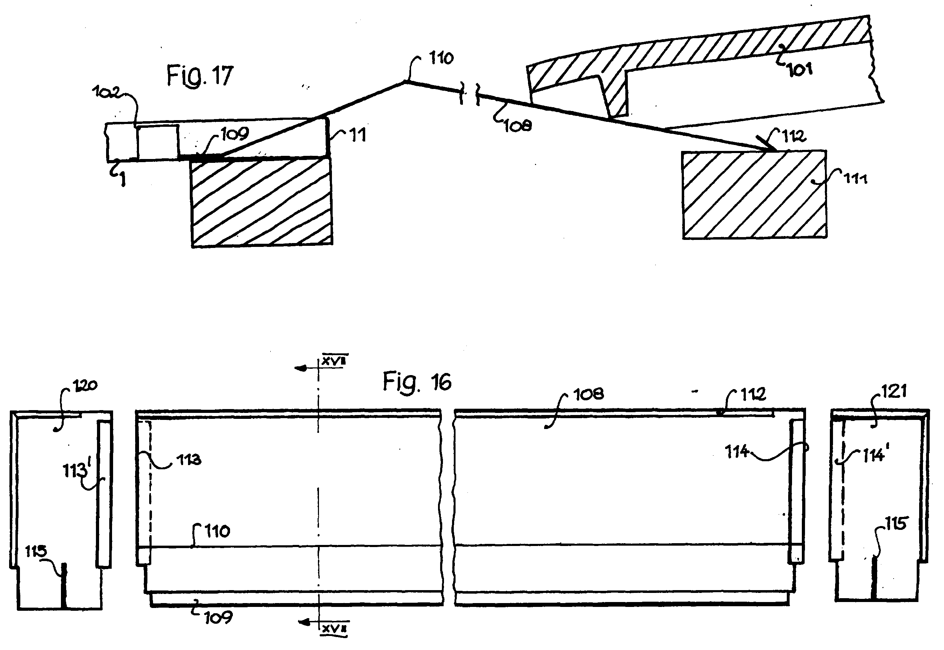

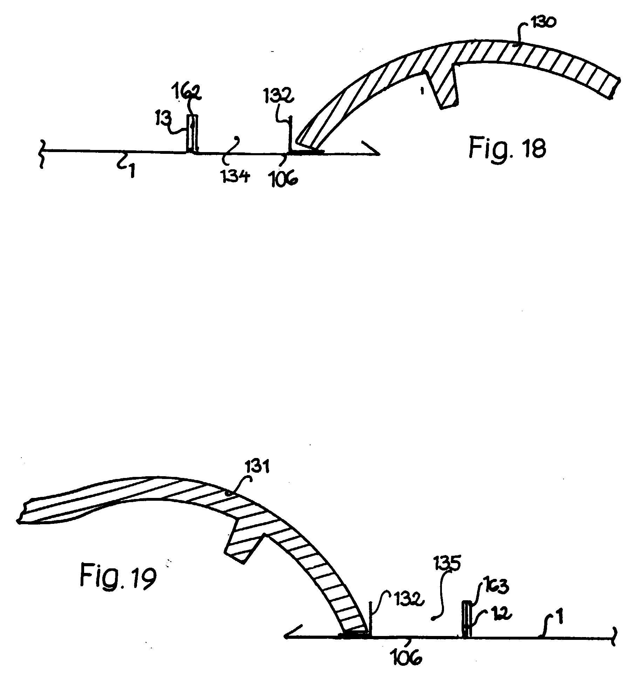

In den Fig. 16 und 17 ist eine abgewandelte Art der Abdichtung des firstseitigen Randbereichs 19 des Modulträgers 1 dargestellt. Hierzu ist ein plattenförmiges Dichtelement 108 aus Blech oder Kunststoff vorgesehen, dessen Breite mit der Breite des Modulträgers 1 im wesentlichen übereinstimmt. An dem firstseitigen Rand weist das Dichtelement 108 eine Abwikelung 109 auf, die auf dem Wannenboden des Modulträgers 1 aufliegt und sich außerdem an einem anschließenden Wuerträger 102 abstützen kann. Der Querträger 102 dient in diesem Fall zur Auflagerung und Befestigung eines nicht gezeigten Solarmoduls. Das plattenförmige Dichtelement 108 erstrckt sich über den firstseitigen Rand 11 des Modulträgers 1 hinweg und weist eine Abknickung 110 auf, die eine Befestigung des Dichtelements 108 an einer firstseitig auf den Modulträger 1 folgenden Dachlatte 111 erlaubt. Für die Befestigung können in dem entsprechenden Randbereich des Dichtelements 108 nicht gezeigte Schrauben- oder Nagellöcher vorgesehen sein. Am firstseitigen Rand 112 ist das Dichtelement nach oben und innen abgewinkelt. Die Abknickung 110 ist so flach, daß auch unter Berücksichtigung einer relativ geringen Dachneigung von den Dachziegeln 101 abströmendes Wasser darüber hinweg in die Wanne des Modulträgers 1 fließen kann.

Die gegenüber liegenden Seitenränder 113 und 114 des Dichtelements 108 springen in ihren traufseitigen Endabschnitten geringfügig nach innen ein, um hierdurch ein Einstecken in die Wanne des Modulträgers 1 zu ermöglichen. Die einspringenden Randabschnitte kommen dadurch an der Innenseite der Räner 12 bzw. 13 des Modulträgers 1 zur Anlage.

Das plattenförmige Dichtelement 108 ist in dem vorliegenden Ausführungsbeispiel für den wannenförmigen Modulträger 1 bestimmt, dessen seitliche Randbereiche in dem vorangehend beschriebenen Ausführungsbeispiel des Dacheindeckungselements durch gesonderte Randleisten 6 gebildet sind (vgl. Fig. 4,5). Dem entsprechend sind auch für das Dichtelement 108 beidseitig Anschlußstücke 120 und 121 vorgesehen, die in ihrer Breite den Randleisten 6 entsprechen. Die Anschlußstücke 120, 121 sind seitlich und firstseitig ebenso mit einem hochstehenden und nach innen abgewinkelten Rand ausgestattet, der dem firstseitigen Rand 112 des Dichtelements 108 entspricht. Zum Zweck der Verbindung der Anschlußstücke 120, 121 mit dem Dichtelement 108 sind deren dem Dichtelement zugeordnete Seitenränder 113',114' nach oben bzw. nach unten auf sich selbst so zurückgefaltet, daß ein niedriger Schiebespalt zwischen den auf diese Weise übereinander liegenden Flächen verbleibt. In gleicher Weise sind die zugeordneten Seitenränder 113 bzw. 114 des Dichtelements komplementär nach unten bzw. oben auf sich selbst zurückgefaltet (vgl. die gestrichelte Darstellung in Fig.16), sodaß diese Faltränder ineinander gefügt werden können. Nach dem Ineinanderfügen schließen die Anschlußstücke 120, 121 weitgehend dicht an das Dichtelement 108 seitlich an und sind fest damit verbunden.

Die Fig. 18,19 zeigen abgewandelte Ausführungsformen von gesonderten Randleisten 106, welche an die Stelle der Randleisten 6 in dem vorangehend beschriebenen Ausführungsbeispiel treten. Prinzipiell sind diese Randleisten 106 unverändert, enthalten jedoch zum Zweck der Abdichtung an seitlich anschließenden Dachziegeln 130 bzw. 131 anstelle von elastisch verformbaren Dichtstreifen 8 (vgl. Fig. 12,13) jeweils eine nach oben ragende Falzrippe 132, die fest mit dem Boden des Randstreifens 106 verbunden ist und sich über deren ganze Länge erstreckt. Zweckmäßigerweise ist die Falzrippe 132 ein Winkelprofil, dessen einer Schenkel durch Klebung oder Schweißung mit dem Boden des Randstreifens 106 verbunden ist. Der jeweils dem Modulträger 1 zugeordnete hochstehende Rand 162 bzw. 163 der Randstreifen 106 ist gleich wie bei dem vorangehend beschriebenen Ausführungsbeispiel gestaltet und wird von dem zugeordneten Rand 13 übergriffen bzw. übergreift seinerseits den zugeordneten Rand 12 des Modulträgers 1. Der jeweils gegenüber liegende Rand der Randstreifen 106 ist nach oben und innen abgewinkelt, um auf diese Weise zusammen mit der Falzrippe 132 eine Rille zum Ableiten von dem zwischen Dachziegelrand und Falzrippe eintretenden Wasser zu schaffen.

Die Dachziegel 130,131 liegen bei dieser Ausführungsform der Randleisten 106 nicht auf Dichtstreifen, sondern auf dem Boden der Randleisten 106 auf und stoßen mit ihrem Rand an die Falzrippe 132 an oder halten nur einen geringen Abstand davon ein. Von den Dachziegeln 130,131 überströmendes Regenwasser gelangt daher je nach anfallender Menge überwiegend in eine Abflußrille 134 bzw. 135, die in jeder Randleiste 106 durch die Falzrippe 132 und den jeweils dem Modulträger 1 zugeordneten Seitenrand 162 bzw. 163 geschaffen ist. Auch in der auf der Außenseite der Falzrippe 132 befindlichen Rille kann Wasser in Richtung Traufe abfließen.

Auch an den Anschlußstücken 120, 121 springen die traufseitigen Seitenrandabschnitte ein, um die Anschlußstücke auf die jeweilige Randleiste 106 aufstecken zu können. Zusätzlich weist jedes Anschlußstück eine Schlitzöffnung 115 auf, in welche die Falzrippe 132 der Randleiste 106 beim Aufstecken eintritt.

Im Rahmen der vorliegenden Erfindung kann von der Ausgestaltung des Modulträgers gemäß den vorstehend beschriebenen Ausführungsbeispielen vielfach abgewichen werden. Wesentlich ist nur, daß der Modulträger 1 in sich eine geschlossene Wannenform aufweist, die eine dichte Verbindung von mehreren Modulträgern durch das geschilderte gegenseitige übergreifen der Wannenränder mittels der Querrille und der Längsrille erlauben. Die Ausbildung der Tragleisten und deren Verbindung mit dem Solarmodul kann beliebig sein; der Modulträger kann auch in beliebiger Weise durch die Tragleisten oder durch zusätzliche Leisten versteift sein. Auch kann anstelle des Schrägverlaufs des traufseitigen Wannenrandes dieser gleich wie die übrigen Wannenränder gestaltet sein. Auch umfaßt der in der vorstehenden Beschreibung und in den Ansprüchen verwendete Begriff einer rechteckigen Form der Modulträger auch den Rechteck-Sonderfall einer quadratischen Gestaltung.

Die in der vorstehenden Beschreibung nicht im einzelnen erläuterten Solarmodule können solche zur Gewinnung elektrischer Energie oder von Wärmeenergie aus der Sonneneinstrahlung sein. In beiden Fällen sind diese Solarmodule als tafelförmige Aggregate bekannt und erhältlich, wobei im Fall eines Solarmoduls zur Wärmegewinnung aus Sonneneinstrahlung in dem Aggregat Flüssigkeitsleitungen gebündelt zusammengefaßt sind. In diesem Fall werden die einzelnen Solarmodule untereinander durch Schlauchverbindungen verbunden, welche über die Ränder der Modulträger hinweg geführt sind.

## Patentansprüche

1. Dacheindeckungselement zur Gewinnung von elektrischer oder Wärmeenergie aus Sonneneinstrahlung, mit einem rechteckigen Solarmodul (5) und einem Modulträger (1) in Gestalt einer rechteckigen flachen Wanne mit hochstehenden Wannenrändern (11, 12, 13,14), wobei die Wanne Befestigungselemente (21) zur Befestigung an einer Dachlattung aufweist, der firstseitige Randbereich (19) der Wanne durch aufliegende, firstseitig anschließende Dachziegel (10,101) elastisch verformbare Dichtstreifen (8,81) trägt, an dem traufseitigen Randbereich (15) der Wanne zum Anschluß an in Traufrichtung anschließende Dachziegel (101) ein plattenförmiges, diese Dachziegel übergreifendes Überlaufelement (9) befestigbar ist, und die Seitenrandbereiche (6) der Wanne als Auflage für seitlich benachbarte Dachziegel (10, 101) elastisch verformbare Dichstreifen (8,81) tragen.

2. Dacheindeckungselement zur Gewinnung von elektrischer oder Wärmeenergie aus Sonneneinstrahlung, mit einem rechteckigen Solarmodul (5) und einem Modulträger (1) in Gestalt einer rechteckigen flachen Wanne mit hochstehenden Wannenrändern (11,12,13,14), wobei die Wanne Befestigungselemente (21) zur Befestigung an einer Dachlattung aufweist, an dem firstseitigen Randbereich (19) der Wanne ein die firstseitig anschließenden Dachziegel untergreifendes plattenförmiges Dichtelement (108) befestigbar ist, an dem traufseitigen Randbereich (15) der Wanne zum Anschluß an in Traufrichtung anschließende Dachziegel (101) ein plattenförmiges, diese Dachziegel übergreifendes Überlaufelement (9) befestigbar ist, und in den Seitenrandbereichen (106) der Wanne jeweils eine nach oben ragende Falzrippe (132) vorgesehen ist, an welcher die zugeordneten Seitenränder von seitlich benachbarten Dachziegeln (130,131) von außen anliegen.

3. Dacheindeckungselement nach Anspruch 1 oder 2,
dadurch gekennzeichnet, daß
ein Seitenrand (13) der Wanne zum Übergreifen des zugeordneten Seitenrands (12) eines benachbarten Dacheindeckungselements gleicher Art eine nach unten offene Längsrille (18) bildet

4. Dacheindeckungselement nach einem der Ansprüche 1 bis 3, dadurch gekennzeichnet,
daß der traufseitige Randbereich (15) der Wanne eine zu deren Unterseite hin offene Querrille (17) zum Übergreifen des firstseitigen Wannenrands eines traufseitig anschließenden Dacheindeckungselement gleicher Art aufweist.

5. Dacheindeckungselement nach Anspruch 3,
dadurch gekennzeichnet, daß die Seitenrandbereiche (6,106) der Wanne durch gesonderte Randleisten gebildet sind, die ihrerseits wannenförmig ausgebildet sind und an ihrer Unterseite eine Längsrille (68) zum Übergreifen eines Seitenrands (12) des Modulträgers (1) (Wanne) aufweisen.

6. Dacheindeckungselement nach einem der Ansprüche 3 bis 5,
dadurch gekennzeichnet,
daß der wannenförmige Modulträger (1) aus Kunststoff oder Blech geformt ist und die Querrille (17) des traufseitigen Randbereichs (15) sowie die Längsrille (18) an dem einen Seitenrand (13) durch jeweils eine Abwinkelung des traufseitigen und des seitlichen Wannenrands gebildet sind.

7. Dacheindeckungselement nach einem der Ansprüche 1 bis 6,
dadurch gekennzeichnet,
daß der traufseitige Wannenrand (14) in Richtung zur Traufe geneigt ist.

8. Dacheindeckungselement nach einem der Ansprüche 1 bis 7,
dadurch gekennzeichnet,
daß der traufseitige Randabschnitt (15) außerhalb des traufseitigen Wannenrands anschließt.

9. Dacheindeckungselement nach Anspruch 8,
dadurch gekennzeichnet,
daß der traufseitige Randabschnitt (15) mit dem Wannenboden des Modulträgers (1) weitgehend in einer Ebene liegt.

10. Dacheindeckungselement nach einem der Ansprüche 2 bis 9, dadurch gekennzeichnet,
daß das die firstseitigen Dachziegel untergreifende plattenförmige Dichtelement (108) sich auf dem Wannenboden des firstseitigen Randbereichs abstützt, quer zur Richtung Traufe-First abgewinkelt ist und mit seinem firstseitigen Randabschnitt an der Dachlattung (111) befestigbar ist.

11. Dacheindeckungselement nach Anspruch 10, dadurch gekennzeichnet, daß der firstseitige Rand (112) des plattenförmigen Dichtelements (108) nach oben abgewinkelt ist.

12. Dacheindeckungselement nach einem der Ansprüche 5 bis 11, dadurch gekennzeichnet, daß an dem firstseitigen Ende jeder Randleiste (106) ein Anschlußstück (120,121) befestigbar ist, welches das plattenförmige Dichtelement seitlich ergänzt und damit verbunden ist.

13. Dacheindeckungselement nach Anspruch 12, dadurch gekennzeichnet, daß das plattenförmige Dichtelement und das Anschlußstück durch Ineinandergreifen ihrer einander zugeordneten , komplementär umgefalteten Seitenränder (113,113';114,114') verbunden sind.

14. Dacheindeckungselement nach Anspruch 12 oder 13, dadurch gekennzeichnet, daß der firstseitige und der freiliegende Seitenrand jedes Anschlußstücks nach oben abgewinkelt sind.

15. Dacheindeckungselement nach einem der Ansprüche 12 bis 14, dadurch gekennzeichnet, daß das Anschlußstück auf das Ende der Randleiste (106) auf steckbar ist und eine Schlitzöffnung (115) zur Aufnahme der nach oben ragenden Falzrippe (132) aufweist.

16. Dacheindeckungselement nach einem der Ansprüche 2 bis 15, dadurch gekennzeichnet, daß die nach oben ragende Falzrippe (132) jedes Seitenrandbereichs (106) durch ein mit dem Wannenboden verbundenes Winkelprofil gebildet ist.

17. Dacheindeckungselement nach einem der Ansprüche 1 bis 16, dadurch gekennzeichnet, daß mit dem Wannenboden des Modulträgers Tragleisten (2,3,4) zur Abstützung des Solarmoduls (5) verbunden sind.

18. Dacheindeckungselement nach Anspruch 17,
dadurch gekennzeichnet,
daß dem firstseitigen und dem traufseitigen Randbereich (19 bzw. 15) zugeordnete quer verlaufende Tragleisten (2,4) den jeweiligen Rand des Solarmoduls übergreifende Halteleisten (22,41) aufweisen, und daß die Halteleisten von benachbarten Modulträgern (1) in einer Ebene liegen.

19. Dacheindeckungselement nach Anspruch 18,
dadurch gekennzeichnet,
daß zumindest eine der Halteleisten (22,41) Federelemente (25) enthält, die das Solarmodul in Richtung auf die andere Halteleiste belasten.

20. Dacheindeckungselement nach Anspruch 17,
dadurch gekennzeichnet,
daß die Tragleisten (2',3') den Rändern des Solarmoduls zugeordnete Federelemente (25',35') tragen, in welche das Solarmodul einschnappbar ist.

21. Dacheindeckungselement nach einem der Ansprüche 17 bis 20, dadurch gekennzeichnet,
daß die Tragleisten Öffnungen zur Durchführung von Anschlußleitungen des Solarmoduls aufweisen.

22. Dach, das zumindest ein Dacheindeckungselement nach einem der Ansprüche 1 bis 21 enthält,
dadurch gekennzeichnet,
daß die Dachziegel, welche an den die Seitenränder (13 bzw. 63) des Dacheindeckungselements anschließen, Doppelwulst-Falzdachziegel (10) oder längsgeschnittene Standard-Falzdach-Ziegel sind.
